# EUROPÄISCHE PATENTSCHRIFT

(11) **EP 1 871 958 B1**
(45) Veröffentlichungstag und Bekanntmachung des Hinweises auf die Patenterteilung: **17.10.2012**
(21) Anmeldenummer: 06724171.1
(22) Anmeldetag: 08.04.2006
(51) Int. Cl.: E04B 1/68, E04D 5/10

(54) **BAUABDICHTMATERIAL**
CONSTRUCTIONAL SEALANT MATERIAL
MATERIAU D'ETANCHEIFICATION DE CONSTRUCTION

(30) Priorität: 22.04.2005 DE 102005019021; 26.04.2005 DE 102005019680
(43) Veröffentlichungstag der Anmeldung: 02.01.2008
(73) Patentinhaber: EWALD DÖRKEN AG, 58313 Herdecke (DE)
(72) Erfinder: SCHRÖER, Jörn, D-58313 Herdecke (DE)
(74) Vertreter: Gesthuysen, von Rohr & Eggert
(86) Internationale Anmeldenummer: PCT/EP2006/003235
(87) Internationale Veröffentlichungsnummer: WO 2006/111288

(56) Entgegenhaltungen:
- EP-A- 0 287 078
- DE-A- 3 342 560
- DE-A1- 3 843 574
- DE-C- 3 150 021
- DE-U- 20 207 877
- DE-U1- 9 405 349

## Beschreibung

Die Erfindung betrifft ein flexibles, flächiges, insbesondere bahnförmiges Bauabdichtmaterial, vorzugsweise zur Verwendung als Mauerwerkssperre und/oder Horizontalabdichtung, nach dem Oberbegriff des Anspruchs 1.

Ein Bauabdichtmaterial der eingangs genannten Art geht bereits aus der DE-C-31 50 021 oder der DE-A-33 42 560 hervor. Die bekannten Bauabdichtmaterialien weisen jeweils Abdichtschichten auf, zwischen denen eine Glasfaserschicht vorgesehen ist. Die Glasfaserschicht dient dabei jeweils als Verstärkungseinlage.

Aus der EP-A-0 287 078 ist ein Bauabdichtmaterial bekannt, das eine zuverlässige Abdichtung für druckstabile, senkrechte und waagerechte Untergründe gegen Bodenfeuchtigkeit, stauendes und nicht-stauendes Sickerwasser und beispielsweise gegen kapillar aufsteigende Feuchtigkeit bilden soll. Problematisch ist, daß auf einer Baustelle relativ rauhe Bedingungen vorherrschen. Durch herabfallende, schwere oder scharfkantige Gegenstände kann es leicht zu Beschädigungen in der Abdichtung kommen. Außerdem können gerade Horizontalabdichtungen durch Baustoffe mit rauher Oberfläche, die auf den Abdichtungsbahnen aufliegen, schnell perforiert werden, so daß eine sichere Abdichtung nicht mehr gewährleistet ist.

Zur Vermeidung der vorgenannten Probleme ist es aus der EP-A-0 287 078 bekannt, ein dreischichtiges Bauabdichtmaterial zu verwenden, das bei einer Ausführungsform eine ober- und eine unterseitige Dichtungsschicht aufweist, zwischen denen ein Träger aus Gewebe, Vlies o.dgl. vorgesehen ist. Jede der Dichtungsschichten hat eine Dicke zwischen 2 bis 2,5 mm, so daß sich eine Gesamtdicke der Dichtungsschichten zwischen 4 bis 5 mm ergibt. Bei einer alternativen Ausführungsform des bekannten Bauabdichtmaterials ist eine unterseitige dickere Dichtungsschicht vorgesehen, die eine Dicke zwischen 3,5 und 4 mm aufweist, während die obere Dichtungsschicht eine Dicke zwischen 0.5 und 1 mm aufweist. Auch bei dieser Ausführungsform liegt die Gesamtdicke der beiden Abdichtungsschichten zwischen 4 und 5 mm. Durch die vergleichsweise hohe Gesamtdicke der Abdichtungsschichten wird bei der EP-A-0 287 078 versucht, die vorgenannten Probleme zu lösen.

Nachteilig ist jedoch, daß das bekannte Bauabdichtmaterial mit derart dicken Abdichtungsschichten nur sehr schwer zu verlegen und außerdem schwer zu handhaben ist. Nachteilig ist im übrigen auch, daß ein derartiges Bauabdichtmaterial aufgrund des hohen Materialeinsatzes durch die dicken Abdichtungsschichten vergleichsweise teuer ist,

Aus der DE-A-38 43 574 ist ein Verfahren und eine Vorrichtung zur Herstellung einer Abdichtbahn mit zwei Trägereinlagen und drei Bitumenschichten bekannt. Die Dicke der einzelnen Bitumenschichten und die Gesamtdicke der Abdichtungsschichten geht aus dieser Veröffentlichung nicht hervor.

Die DE-U-94 05 349 betrifft eine mehrschichtige Dachbahn mit UV-Strahlung reflektierender Beschichtung, wobei ein mittiges Vlies vorgesehen ist, das mit Bitumen getränkt und mit einer verschweißbaren Unterbeschichtung und einer verschweißbaren Oberbeschichtung versehen ist. Die Dicke der Unter- und der Oberbeschichtung ist nicht angegeben.

Aus der Dz-202 07 877 ist ein Abdichtbahnmaterial bekannt, das eine innenliegende Entkopplungsschicht und außenliegende Abdichtungsschichten aufweist. Bei den äußeren Abdichtungsschichten handelt es sich jeweils um eine HDPE-Folie mit einer Dicke zwischen 20 bis 100 µm. Ein derartiges Abdichtbahnmaterial ist jedoch für den Einsatz in der Praxis nicht geeignet, da es relativ leicht perforierbar ist.

Aufgabe der vorliegenden Erfindung ist es nun, ein Bauabdichtmaterial der eingangs genannten Art zur Verfügung zu stellen, das möglichst einfach aufgebaut und kostengünstig herstellbar ist und im übrigen eine hinreichende Dichtigkeit auch unter Berücksichtigung der rauhen Einsatzbedingungen auf einer Baustelle liefert.

Zur Lösung der vorgenannten Aufgabe ist ein Bauabdichtmaterial gemäß Anspruch 1 vorgesehen. Dabei bilden die einzelnen Abdichtungsschichten jeweils voneinander unabhängige Abdichtungsebenen, so daß bei Beschädigung einer Ebene die andere Abdichtungsebene noch wirksam ist.

Wichtig ist weiterhin, daß die beiden Abdichtungsschichten über wenigstens eine zwischen diesen Abdichtungsschichten liegende Entkopplungsebene voneinander getrennt sind. Die innenliegende Entkopplungsebene sorgt für eine Entkoppelung der beiden Abdichtungsschichten und trägt dazu bei, daß das Bauabdichtmaterial insgesamt eine höhere Perforationsfestigkeit aufweist. Bei der Erfindung ist nämlich festgestellt worden, daß der erfindungsgemäße Schichtenaufbau mit wenigstens zwei voneinander unabhängigen Abdichtungsschichten und einer dazwischenliegenden Entkopplungsebene dazu führt, daß die Abdichtung in der Lage ist, solchen äußeren Kräften Stand zu halten, die bei einer gleichdicken Abdichtung, bei der jedoch nur eine Abdichtungsschicht vorgesehen ist, eine Perforation und damit eine Undichtigkeit herbeiführen. Der Grund für diese gesteigerte Perforationsfestigkeit liegt in folgenden. Fällt ein spitzer Gegenstand mit einem höheren Gewicht auf die erfindungsgemäße Abdichtung, ergibt sich zunächst eine Perforation der oben liegenden Abdichtungsschicht. Beim Auftreffen des spitzen Gegenstandes auf die obere Abdichtungsschicht wird diese quasi aufgespalten. Diese Spaltbildung bei der Perforation endet jedoch in der Entkopplungsebene. Je nach Verwendung des Materials in der Entkopplungsebene wird ergänzend weitere Energie von dem herabfallenden Gegenstand aufgenommen und in Verformungsenergie umgesetzt. Erst nach dem Durchtritt durch die Entkopplungsebene erreicht der spitze Gegenstand die zweite Abdichtungsschicht. Die kinetische Energie des spitzen Gegenstandes reicht jedoch nicht mehr aus, auch die zweite Abdichtungsebene noch aufzuspalten. Dem gegenüber ist es bei einer Abdichtbahn mit nur einer Abdichtungsschicht so, daß der auftreffende spitze Gegenstand die Abdichtungsschicht aufspaltet und sich der Spalt zum Ende dieser Schicht fortsetzt, so daß sich eine Perforation ergibt. Da die erfindungsgemäße Bauabdichtbahn zwei Abdichtungsschichten mit der dazwischenliegenden Entkopplungsebene aufweist, ist selbst bei Perforation einer Abdichtungsbahn noch eine Dichtigkeit gewährleistet.

Auch kann die erfindungsgemäße Abdichtung durch den vorgenannten Schichtenaufbau etwaige Verformungen durch Bauwerkssetzungen oder das Eindringen von Baustoffen auffangen, ohne daß die Wasserdichtigkeit beeinträchtigt wird. Weiterhin ist der erfindungsgemäße Schichtaufbaus auch relativ einfach, so daß die Abdichtung insgesamt einen sehr geringen Materialbedarf hat, es sich also letztlich um ein relativ dünnes Schichtmaterial handelt, das gut zu verlegen und kostengünstig herstellbar ist.

Darüber hinaus ist im Zusammenhang mit der vorliegenden Erfindung festgestellt worden, daß die Gesamtdicke aller Abdichtungsschichten des erfindungsgemäßen Bauabdichtmaterials einen Mindestwert von 250 µm haben muß. Ist die Gesamtdicke aller Abdichtungsschichten geringer als die Mindestdicke von mindestens 250 µm, kann eine den rauhen Bedingungen am Bau Rechnung tragende Mindestbelastbarkeit des Bauabdichtmaterial nicht mehr gewährleistet werden. Gesamtdicken von weniger als 250 µm führen zu sehr geringen Einzeldicken der jeweiligen Abdichtungsschichten, so daß selbst bei geringsten Belastungen der Bahn Perforationen auftreten können.

Bei Versuchen ist festgestellt worden, daß, um den üblichen Anforderungen auf dem Bau gerecht zu werden, die Gesamtdicke der Abdichtungsschichten zwischen 250 µm und 2500 µm liegen sollte. Bevorzugt liegt die Gesamtdicke der Abdichtungsschichten zwischen 350 µm und 1200 µm und insbesondere im Bereich zwischen 400 µm und 800 µm. Die Dicke der einzelnen Abdichtungsschichten richtet sich danach, wie viele Schichten insgesamt das Bauabdichtmaterial aufweist. Hierbei gilt grundsätzlich, daß bei gleicher Perforationsfestigkeit die Gesamtdicke beispielsweise bei einem Material mit drei Abdichtungsschichten geringer sein kann als bei einem Material mit nur zwei Abdichtungsschichten. So kann bei gleicher Perforationsfestigkeit bei einem Bauabdichtmaterial mit zwei Abdichtungsschichten die Gesamtdicke 600 µm betragen, während bei einem Bauabdichtmaterial mit drei Abdichtungsschichten die Gesamtdicke lediglich 520 µm beträgt.

Um den Anforderungen in der Praxis gerecht zu werden, ist es auch von wesentlicher Bedeutung, daß das erfindungsgemäße Bauabdichtmaterial insgesamt derart ausgebildet ist, daß ein Perforationsversuch nach DIN 16 726 (in der Fassung Dezember 1986) bestanden wird. Dies ist beispielsweise bei einer Abdichtung, bei der die Abdichtungsschichten insgesamt nicht die Mindestgesamtdicke von 250 µm aufweisen, nicht der Fall. Der Perforationsversuch wird bei der Erfindung, um den üblichen Anforderungen am Bau gerecht zu werden, mit einer Fallhöhe von mindestens 200 mm, insbesondere mindestens 300 mm und vorzugsweise mindestens 400 mm bestanden, wobei die Dichtigkeit des erfindungsgemäßen Bauabdichtmaterials nach dem Perforationsversuch bei einer statischen Wassersäule von mindestens 1000 mm, insbesondere mindestens 1500 mm und bevorzugt mindestens 2000 mm gegeben ist.

Von besonderem Vorteil ist es, daß in der Entkopplungsebene wenigstens eine Entkopplungsschicht vorgesehen ist. Die Entkopplungsschicht hat dann nicht nur die Aufgabe, die benachbarten Abdichtungsschichten voneinander zu entkoppeln. Letztlich wird ein Teil der durch einen herabfallenden schweren Gegenstand in das erfindungsgemäße Bauabdichtmaterial eingebrachten kinetischen Energie in der Entkopplungsschicht in Verformungsenergie umgewandelt, so daß der verbleibende Teil an kinetischer Energie, der auch auf die nächste Abdichtungsschicht wirkt, möglichst gering ist.

Besonders günstig ist es in diesem Zusammenhang, daß die Entkopplungsschicht derart ausgebildet ist, daß die Entkopplung zwischen der ersten Abdichtungsschicht und der zweiten Abdichtungsschicht innerhalb der Entkopplungsschicht erfolgt. Dies setzt letztlich die Verwendung eines entsprechenden Materials, das eine Entkopplung in sich ermöglicht, voraus. Hierbei kann es sich beispielsweise um ein Vlies, ein Gewebe, ein Gelege, ein Textil, ein kriechendes oder kaltfließendes Material (z. B. Bitumen oder ataktisches PP), einen Schaum und/oder ein elastisches Material handeln. Bei Versuchen, die durchgeführt worden sind, ist festgestellt worden, daß besonders gute Entkopplungs- und Energieaufnahmeeffekte erzielt werden, wenn als Entkopplungsschicht ein Kunststoffvlies, vorzugsweise aus Polypropylen und insbesondere mit einem Flächengewicht zwischen 30 g/m² und 300 g/m² verwendet wird.

Da die einzelnen Abdichtungsschichten nur teilweise bzw. teilflächig mit der Entkopplungsschicht verbunden sind, erfolgt eine Entkopplung nicht nur in der Entkopplungsschicht selbst, sondern auch am Übergang von der Entkopplungsschicht zur Abdichtungsschicht in den nicht verbundenen Bereichen.

Im übrigen versteht es sich, daß die Entkopplungsschicht sowohl ein- als auch mehrschichtig ausgebildet sein kann, wobei bei der Mehrschichtigkeit mehrere Schichten aus gleichem oder auch aus unterschiedlichen Material eingesetzt werden können. Dabei können die einzelnen Schichten untereinander sowohl teil- als auch vollflächig miteinander verbunden sein.

Bei den zuvor beschriebenen Ausführungsformen ist in der Entkopplungsebene eine Entkopplungsschicht, die im übrigen wasserdicht sein kann, jedoch nicht wasserdicht sein muß, vorgesehen. Alternativ ist es grundsätzlich möglich, die beiden Abdichtungsschichten insbesondere lediglich partiell miteinander zu verbinden, wobei die Entkopplungsebene dann durch den insbesondere unverbundenen Zwischenraum zwischen den Abdichtungsschichten gebildet ist. Bei dieser letztlich wenigstens zweischichtigen Abdichtung sollten die beiden Abdichtungsschichten grundsätzlich eine etwas größere Dicke haben als bei einer entsprechenden Abdichtung mit Entkopplungsschicht, da hierbei die sonst energieaufnehmende Entkopplungsschicht nicht vorgesehen ist. Ansonsten ergeben sich bei dieser Ausführungsform aber die gleichen erfindungsgemäßen Vorteile.

Sowohl bei der zuvor beschriebenen Ausführungsform ohne Entkopplungsschicht in der Entkopplungsebene als auch mit Entkopplungsschicht kann es sich anbieten, wenigstens eine ergänzende Verstärkungsschicht zur Aufnahme von Verformungsenergie vorzusehen. Bei der Verstärkungsschicht kann es sich beispielsweise um Verstärkungslagen wie Gewebe, Gelege, Metallfolie oder Streckmetall handeln.

Bezüglich des Materials der Abdichtungsschicht bietet es sich an, Kunststoff zu verwenden. Dabei eignen sich insbesondere Polyolefine (bevorzugt Polyethylen, EVA oder Polypropylen), Polyester, Polyurethan oder PVC, wobei es sich versteht, daß die Kunststoffe die üblichen Additive, wie Stabilisatoren, Farbmittel, Füllstoffe, Verstärkungsfasern und dergleichen, enthalten.

Das Flächengewicht einer Abdichtungsschicht sollte zwischen 50 g/m² und 1000 g/m² liegen, wobei das Flächengewicht von 50 g/m² bei Polyolefinen einer Dicke von etwa 50 µm und das Flächengewicht von 1000 g/m² einer Dicke von etwa 1 mm entspricht. Es versteht sich, daß bei der Verwendung von Abdichtungsschichten mit einem geringen Flächengewicht eine entsprechend hohe Anzahl von Abdichtungsschichten vorgesehen sein muß, um die erfindungsgemäß vorgesehene Mindestdicke von 250 µm zu erreichen.

Von Bedeutung im Zusammenhang mit der vorliegenden Erfindung ist auch, daß das Flächengewicht der Abdichtungsschichten einen Mindestwert von 220 g/m² aufweist. Es ist festgestellt worden, daß gerade bei dünnen Abdichtungsschichten aus Materialien mit einer Dichte zwischen 0,6 kg/dm³ bis 1,4 kg/dm³ und insbesondere zwischen 0,8 kg/dm³ und 1,2 kg/dm³, ein Mindestflächengewicht aller Abdichtungsschichten von mehr als 220 g/m² gegeben sein sollte, um eine hinreichende Perforationsfestigkeit zu erzielen. Vorzugsweise sollte das Flächengewicht aller Abdichtungsschichten zwischen 250 g/m² und 2500 g/m², bevorzugt zwischen 350 g/m² und 1200 g/m² und insbesondere zwischen 400 g/m² und 800 g/m² liegen.

Kommen bei dem erfindungsgemäßen Material Entkopplungsschichten zum Einsatz, beträgt das Mindestgesamtflächengewicht des Bauabdichtmaterials 230 g/m². Vorzugsweise sollte das Gesamtflächengewicht des Bauabdichtmaterials zwischen 250 g/m² und 3000 g/m². bevorzugt zwischen 400 g/m² und 1500 g/m² und insbesondere zwischen 500 g/m² und 1000 g/m² liegt.

Es wird an dieser Stelle ausdrücklich darauf hingewiesen, daß sämtliche Werte, die in den vorstehenden Bereichsangaben enthalten sind, ausdrücklich von der Offenbarung erfaßt sind, ohne daß es einer ausdrücklichen Erwähnung bedarf.

Im übrigen ist es von Vorteil, wenn der Schichtenverbund des erfindungsgemäßen Bauabdichtmaterials als Dampfsperre ausgebildet und/oder bitumenbeständig ist.

Um den Herstellungsvorgang so einfach wie möglich zu gestalten, bietet es sich an, die erste Abdichtungsschicht und/oder die zweite Abdichtungsschicht durch Extrusionsbeschichtung auf die Entkopplungsschicht aufzubringen. Bei der Extrusionsbeschichtung ergibt sich bei Wahl einer entsprechenden Entkopplungsschicht, insbesondere bei Verwendung eines Kunststoffvlieses, eine feste Verbindung zwischen der Entkopplungsschicht und der oder den Abdichtungsschichten, ohne daß eine ergänzende Verklebung oder Verschweißung erforderlich wäre.

Darüber hinaus bietet es sich an, auf wenigstens einer Außenseite des erfindungsgemäßen Bauabdichtmaterials eine Strukturierung oder aber zumindest teilflächig einen Haftvermittler und/oder eine Klebschicht vorzusehen. Die Strukturierung kann beispielsweise durch ein vliesartiges, faseriges, textiles oder poriges Material, anhaftende Partikel (z. B. Sand), Hinterschneidungen und/oder Vorsprünge erzeugt werden. Durch die Strukturierung ist gewährleistet, daß sie nach Auftragen eines entsprechenden Klebers eine gute Verbindung zum Boden bzw. zur Wand ergibt.

Insbesondere bei der Ausführungsform, bei der innerhalb der Entkopplungsebene keine Entkopplungsschicht vorgesehen ist, bietet es sich an, die einander zugewandten Innenseiten der benachbarten Abdichtungsschichten zu profilieren. Durch die Profilierung der einander zugewandten Innenseiten wird verhindert, daß die nur partiell verbundenen Abdichtungsschichten sich bei entsprechender Belastung zu leicht gegeneinander verschieben. Aber auch im übrigen hat die Profilierung der einander zugewandten Innenseiten der Abdichtschichten den Vorteil, daß die Verbindung zu den benachbarten Schichten verbessert wird.

Eine einfache und kostengünstige Möglichkeit der Herstellung des erfindungsgemäßen Materials besteht darin, vorzugsweise beide Abdichtungsschichten durch Extrusionsbeschichtung auf die Entkopplungsschicht aufzubringen. Um in diesem Zusammenhang eine außenseitige Strukturierung auf der oder den Abdichtungsschichten zu haben, kann vorgesehen sein, daß wenigstens eine Abdichtungsschicht insbesondere durch eine profilierte Andruckwalze außenseitig profiliert und damit strukturiert wird.

Statt des zuvor beschriebenen Dreischichtmaterials ist es grundsätzlich auch möglich, ein Material mit mehr als drei Schichten herzustellen. Die Schichtenanzahl kann sowohl gerade als auch ungerade sein. Nachfolgend wird beispielhaft auf die Herstellung eines fünf- und eines siebenschichtigen Materials eingegangen. In beiden Fällen wird zunächst in einem ersten Herstellungsschritt ein Dreischichtmaterial als Halbzeug hergestellt, und zwar derart, daß eine Abdichtungsschicht zwischen zwei Vliesschichten so extrudiert wird, daß sich auf beiden Seiten der Abdichtungsschicht eine Verbindung mit einer Vliesschicht ergibt. Der Vollständigkeit halber darf darauf hingewiesen werden, daß statt der Vliesschichten auch ein anderes, wirkungsgleiches Material verwendet werden kann.

Zur Herstellung des Fünfschichtmaterials wird dann eine Abdichtungsschicht derart zwischen das Dreischichtmaterial und eine Vliesschicht extrudiert, daß sich auf beiden Seiten der Abdichtungsschicht eine Verbindung mit dem Dreischichtmaterial einerseits und der Vliesschicht andererseits ergibt.

Bei Herstellung eines Siebenschichtmaterial wird eine Abdichtungsschicht derart zwischen zwei Dreischichtmaterialien extrudiert, daß sich auf beiden Seiten der Abdichtungsschicht eine Verbindung mit einem Siebenschichtmaterial ergibt.

Statt der zuvor beschriebenen Herstellung des Fünf- oder Siebenschichtmaterials über ein dreischichtiges Halbzeugmaterial ist es grundsätzlich auch möglich, beispielsweise ein fünfschichtiges Material durch gleichzeitiges Zulaufen und paralleles Erzeugen von fünf Schichten herzustellen.

Weitere Merkmale und Vorteile von Ausführungsformen der Erfindung ergeben sich aus der nachfolgenden Beschreibung von Ausführungsbeispielen anhand der Zeichnung. Dabei zeigt
- Fig. 1: eine Querschnittsansicht des Schichtaufbaus einer ersten Ausführungsform des erfindungsgemäßen Bauabdichtmaterials,
- Fig. 2: eine Querschnittsansicht des Schichtaufbaus einer zweiten Ausführungsform des erfindungsgemäßen Bauabdichtmaterials,
- Fig. 3: eine Querschniusansicht des Schichtaufbaus einer dritten Ausführungsform des erfindungsgemäßen Bauabdichtmaterials,
- Fig. 4: eine Querschnittsansicht des Schichtaufbaus einer vierten Ausführungsform des erfindungsgemäßen Bauabdichtmaterials und
- Fig. 5: eine Querschnittsansicht des Schichtaufbaus einer fünften Ausführungsform des erfindungsgemäßen Bauabdichtmaterials.

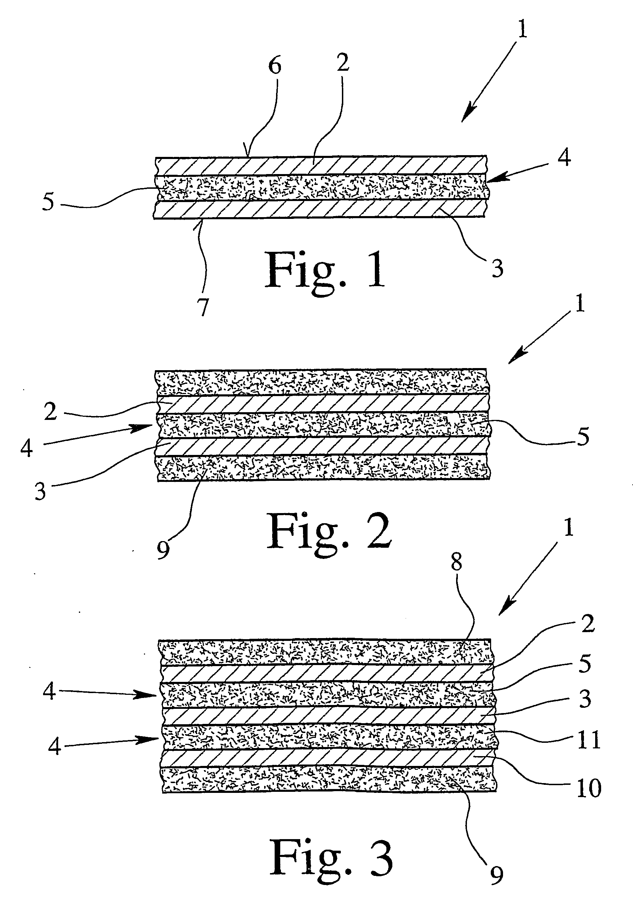

In den Figuren 1 bis 3 ist der erfindungsgemäß unverbundene Freiraum zwischen den Abdichtungsschichten nicht gezeigt. In den Figuren sind zudem jeweils unterschiedliche Ausführungsformen von Bauabdichtmaterialien 1 dargestellt. Bei dem Material 1 handelt es sich um eine flexible, flächige Bahn, die als Vertikalabdichtung, beispielsweise als Mauerwerksperre und auch als Horizontalabdichtung zur Abdichtung von Bauwerken verwendet werden kann. Derartige Bahnen werden üblicherweise in Rollenform gelagert. Die Länge der Bahnen liegen zwischen 10 m und 50 m, üblicherweise bei 25 m. Die Rollenbreiten können ebenfalls variieren und liegen in der Regel zwischen 10 cm und 200 cm. Im übrigen liegt die Dicke des Bauabdichtmaterials 1 in der Regel zwischen 0,25 mm und 2 mm. Es sei darauf hingewiesen, daß innerhalb der vorgenannten Intervalle jeder beliebige Wert möglich ist, ohne daß es einer ausdrücklichen Erwähnung bedarf.

Bei der in Fig. 1 dargestellten Ausführungsform weist das Bauabdichtmaterial 1 eine erste wasserdichte Abdichtungsschicht 2 und eine zweite wasserdichte Abdichtungsschicht 3 auf. Bei den beiden Abdichtungsschichten 2, 3 handelt es sich jeweils um Folien aus LDPE. Im dargestellten Ausführungsbeispiel hat die erste Abdichtungsschicht 2 ein Flächengewicht von 300 g/m², während die zweite Abdichtungsschicht 3 ein Flächengewicht von 250 g/m² aufweist. Damit beträgt die Dicke der ersten Abdichtungsschicht 2 etwa 300 µm, während die Dicke der zweiten Abdichtungsschicht 3 etwa 250 µm beträgt, so daß sich eine Gesamtdicke der beiden Abdichtungsschichten 2, 3 von etwa 550 µm ergibt.

Es sei darauf hingewiesen, daß es sich versteht, daß es grundsätzlich auch möglich ist, daß die beiden Abdichtungsschichten 2, 3 jeweils das gleiche Flächengewicht und die gleiche Dicke aufweisen.

Zwischen den beiden Abdichtungsschichten 2, 3, die jeweils eine Abdichtungsebene bilden, befindet sich eine innenliegende Entkopplungsebene 4. Die Entkopplungsebene 4 weist vorliegend eine Entkopplungsschicht 5 auf, bei der es sich um ein Polypropylen-Nadelvlies mit einem Flächengewicht von 100 g/m² handelt. Die Dicke der Entkopplungsschicht 5 beträgt etwa 700 µm.

Nicht dargestellt ist, daß die beiden Abdichtungsschichten 2, 3 auf ihren Außenseiten 6, 7 strukturiert bzw. profiliert sind.

Die in Fig. 2 dargestellte Ausführungsform unterscheidet sich von der in Fig. 1 dargestellten Ausführungsform dadurch, daß als äußere Schichten jeweils Vliesschichten 8, 9 vorgesehen sind. Das Flächengewicht dieser Vliesschichten 8, 9 ist geringer als das der Entkopplungsschicht 5 und liegt vorliegend bei etwa 70 g/m².

In Fig. 3 ist ein siebenschichtiges Bauabdichtmaterial 1 dargestellt. Die Schichtenfolge wechselt sich zwischen Abdichtungsschichten 2, 3, 10 und Vliesschichten 5, 8, 9 und 11 ab. Aufgrund der beiden Vliesschichten 5, 11 zwischen den einzelnen Abdichtschichten weist das vorliegende Bauabdichtmaterial 1 zwei Entkopplungsebenen 4 auf.

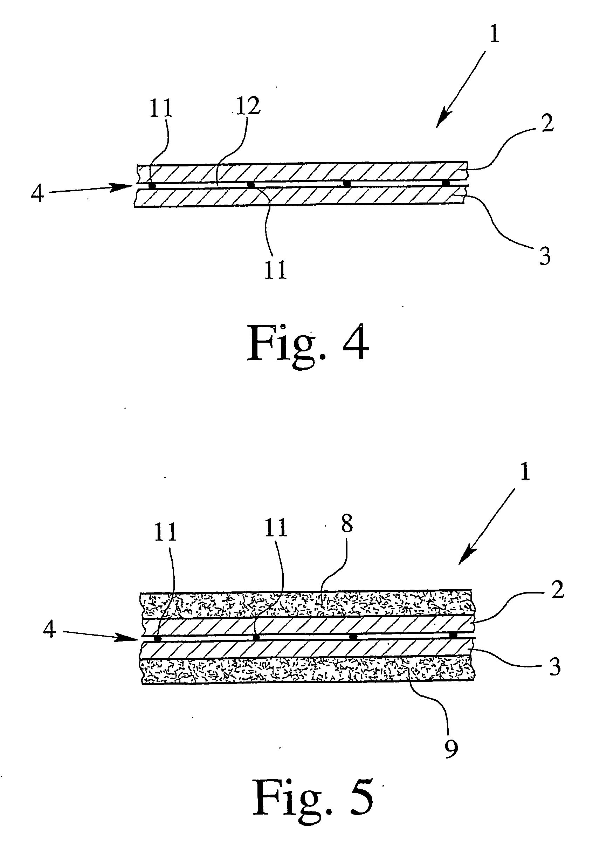

Die in den Fig. 4 und 5 dargestellten Ausführungsformen unterscheiden sich von den in den Fig. 1 und 3 dargestellten Ausführungsformen dadurch, daß in der Entkopplungsebene 4 keine Entkopplungsschicht vorgesehen ist. Die Abdichtungsschichten 2, 3 sind partiell über entsprechende Verbindungsstellen 11 miteinander verbunden. Bei den Verbindungsstellen 11 kann es sich um Verklebungen oder Verschweißungen handeln. Dabei ist es grundsätzlich möglich, daß die Verbindungsstellen, unabhängig von der Art ihrer Herstellung derart ausgebildet sind, daß sie partiell stärker und partiell schwächer verbinden. Die Verbindungsstellen 11 können beispielsweise punktweise in der Art eines Rasters oder linienförmig in der Art eines Gitters über die Fläche verteilt sein, wobei der Verbindungsanteil an der Gesamtfläche kleiner 20% und insbesondere kleiner 10% ist. Die Entkopplungsebene 4 wird vorliegend durch den zwischen den Abdichtungsschichten 2, 3 vorgesehenen, unverbundenen Frei- bzw. Zwischenraum 12 gebildet. Die Verwendung eines Gitters bietet den Vorteil, daß sich durchgehende längs- und querlaufende Abdichtungsabschnitte ergeben, so daß Feuchtigkeit nicht durch den Schichtenverbund von einer Längsseite der Bahn zur anderen gelangen kann. Auch beispielsweise bei einer oberseitigen Perforation kann kein Wasser durch die Entkopplungsebene hindurch entweichen.

Im übrigen entspricht das in Fig. 4 dargestellte Ausführungsbeispiel dem in Fig. 1 dargestellten unter Weglassung der Entkopplungsschicht 5, während das in Fig. 5 dargestellte Ausführungsbeispiel dem in Fig. 2 dargestellten Ausführungsbeispiel ebenfalls unter Weglassung der Entkopplungsschicht 5 entspricht.

Nicht dargestellt ist, daß es grundsätzlich möglich ist, bei jeder der dargestellten Ausführungsformen eine oder mehrere zusätzliche Verstärkungsschichten vorzusehen. Die Verstärkungsschicht dient ergänzend dazu, kinetische Energie aufzunehmen und in Verformungsenergie umzuwandeln. Eine derartige Schicht kann sowohl außenliegend als auch an beliebiger Stelle innenliegend vorgesehen sein.

Die Herstellung eines der Fig. 1 entsprechenden Dreischichtmaterials erfolgt derart, daß in einem ersten Arbeitsgang unter Verwendung einer Extrusionsanlage eine Folie aus LDPE mit einem Flächengewicht von 300 g/m² hergestellt wird. Während des Prozesses läuft ein 100 g/m² Polypropylen-Nadelvlies zu und wird an der Oberfläche mit der LDPE-Schmelze verbunden. In einem zweiten Arbeitsgang wird der erste Arbeitsgang auf der Vliesseite mit 250 g/m² LDPE zur Herstellung der zweiten Abdichtungsschicht 3 beschichtet. Bei der Herstellung des Materials 1 wird die Schmelze unter Verwendung einer strukturierten Andruckwalze profiliert.

Zur Herstellung eines der Fig. 3 entsprechenden Siebenschichtmaterials wird in einem ersten Arbeitsgang unter Verwendung einer Extrusionsanlage eine Folie aus 160 g/m² EVA-Copolymer (Ethylenvinylacetat) mit 28% VA-Gehalt derart zwischen zwei thermisch verfestigte Polypropylen-Vliese (je 70 g/m²) extrudiert, daß diese an der Oberfläche mit dem EVA verbunden werden. In einem zweiten Arbeitsgang wird zwischen zwei im ersten Arbeitsgang hergestellten Dreischichtmaterialien eine Folie aus 200 g/m² EVA-Copolymer mit 28% VA-Gehalt extrudiert, so daß die Vliesoberflächen mit dem EVA verbunden werden.

Bei dem vorstehend beschriebenen Siebenschichtmaterial liegt die Gesamtdicke des Abdichtungsmaterials bei 520 µm. Ein derartiges Material mit drei Abdichtungsschichten schneidet im Perforationsversuch besser ab als ein Material mit nur zwei Abdichtungsschichten und einer Gesamtdicke von 520 µm und insbesondere besser als ein Material mit nur einer Abdichtungsschicht mit der gleichen Schichtdicke.

Nach der Herstellung wird das erfindungsgemäße Material 1 auf Rollen vorgebender Länge aufgerollt und kann anschließend verlegt werden.

Zur Herstellung einer großflächigen Abdichtung ist das Material verschweißbar bzw. verklebbar. Insbesondere bei einer Klebeverbindung sollten längslaufende Kleberänder vorgesehen sein.

## Patentansprüche

1. Flexibles, flächiges, insbesondere bahnförmiges, Bauabdichtmaterial (1), vorzugsweise zur Verwendung als Mauerwerkssperre und/oder Horizontalbauabdichtung, mit wenigstens einer ersten wasserdichten Abdichtungsschicht (2) als erste Abdichtungsebene und einer zweiten wasserdichten Abdichtungsschicht (3) als zweite Abdichtungsebene, wobei die Gesamtdicke der Abdichtungsschichten (2, 3, 10) zwischen 250 µm und 2500 µm liegt, und wobei zwischen der ersten Abdichtungsebene und der zweiten Abdichtungsebene wenigstens eine innenliegende Entkopplungsebene (4) vorgesehen ist, über die die erste Abdichtungsschicht (2) von der zweiten Abdichtungsschicht (3) entkoppelt ist, so daß sich wenigstens zwei voneinander unabhängige und getrennte Abdichtungsschichten mit dazwischenliegender Entkopplungsebene ergeben, **dadurch gekennzeichnet, daß** die erste Abdichtungsschicht (2) und die zweite Abdichtungsschicht (3) partiell miteinander verbunden sind, wobei die Entkopplungsebene (4) einen unverbundenen Freiraum zwischen den Abdichtungsschichten (2, 3) aufweist.

2. Bauabdichtmaterial nach Anspruch 1, **dadurch gekennzeichnet, daß** die Gesamtdicke der Abdichtungsschichten (2, 3, 10) zwischen 350 µm und 1200 µm und insbesondere im Bereich zwischen 400 µm und 800 µm liegt.

3. Bauabdichtmaterial nach Anspruch 1 oder 2, **dadurch gekennzeichnet, daß** in der Entkopplungsebene (4) wenigstens eine Entkopplungsschicht (5) vorgesehen ist, daß die Entkopplungsschicht (5) bei Perforation einer Abdichtungsschicht zur Umwandlung von kinetischer Energie in Verformungsenergie dient, und/oder daß die Entkopplungsschicht (5) derart ausgebildet ist, daß die Entkopplung zwischen der ersten Abdichtungsschicht (2) und der zweiten Abdichtungsschicht (3) innerhalb der Entkopplungsschicht (5) erfolgt.

4. Bauabdichtmaterial nach einem der vorhergehenden Anspruch, **dadurch gekennzeichnet, daß** die vorzugsweise mehrschichtig ausgebildete Entkopplungsschicht (5) ein Vlies, ein Gewebe, ein Gelege, ein Textil, ein kriechendes oder kaltfließendes Material, einen Schaum und/oder ein elastisches Material aufweist oder daß die Entkopplungsschicht (5) als Kunststoffvlies, vorzugsweise aus Polyproylen, und insbesondere mit einem Flächengewicht zwischen 30 g/m² und 300 g/m² ausgebildet ist.

5. Bauabdichtmaterial nach einem der vorhergehenden Ansprüche, **dadurch gekennzeichnet, daß** wenigstens eine Verstärkungsschicht vorgesehen ist.

6. Bauabdichtmaterial nach einem der vorhergehenden Ansprüche, **dadurch gekennzeichnet, daß** der Schichtenverbund des Bauabdichtmaterials (1) als Dampfsperre und/oder bitumenbeständig ausgebildet ist.

7. Bauabdichtmaterial nach einem der vorhergehenden Ansprüche, **dadurch gekennzeichnet, daß** die Abdichtungsschicht (2, 3 10) durch Extrusionsbeschichtung auf die Entkopplungsschicht (5) aufgebracht ist.

8. Bauabdichtmaterial nach einem der vorhergehenden Ansprüche, **dadurch gekennzeichnet, daß** auf wenigstens einer Außenseite des Bauabdichtmaterials (1) eine Strukturierung, insbesondere eine vliesartiges, faseriges, textiles oder poriges Material, anhaftende Partikel, Hinterschneidungen und/oder Vorsprünge, und/oder zumindest teilflächig ein Haftvermittler und/oder eine Klebeschicht vorgesehen ist.

9. Bauabdichtmaterial nach einem der vorhergehenden Ansprüche, **dadurch gekennzeichnet, daß** die einander zugewandten Innenseiten von benachbarten Abdichtungsschichten (2, 3, 9) profiliert sind.

## Claims

1. Flexible, planar, especially sheet-like building sealing material (1), preferably for use as a brickwork barrier and/or as a horizontal building seal, having at least one first watertight sealing course (2) as a first sealing layer and a second watertight sealing course (3) as a second sealing layer, wherein the total thickness of the sealing courses (2, 3, 10) lies between 250 µm and 2500 µm, and wherein provision is made between the first sealing layer and the second sealing layer for at least one inner decoupling layer (4) via which the first sealing course (2) is decoupled from the second sealing course (3) so that at least two sealing courses, being independent of each other and separated from each other, with a decoupling layer in between, are created, **characterized in that** the first sealing course (2) and the second sealing course (3) are partially interconnected, wherein the decoupling layer (4) has an unconnected free space between the sealing courses (2, 3).

2. Building sealing material according to Claim 1, **characterized in that** the total thickness of the sealing courses (2, 3, 10) lies between 350 µm and 1200 µm and particularly in the range of between 400 µm and 800 µm.

3. Building sealing material according to Claim 1 or 2, **characterized in that** at least one decoupling course (5) is provided in the decoupling layer (4), **in that** the decoupling course (5), in the event of perforation of a sealing course, serves for converting kinetic energy into deformation energy, and/or **in that** the decoupling course (5) is formed in such a way that the decoupling between the first sealing course (2) and the second sealing course (3) is carried out inside the decoupling course (5).

4. Building sealing material according to one of the preceding claims, **characterized in that** the decoupling course (5), preferably formed in a multiple of layers, features a non-woven fabric, a woven fabric, a multi-ply weave, a textile, a creeping material or cold flowing material, a foam and/or an elastic material, or **in that** the decoupling course (5) is formed as plastic fabric, preferably consisting of polypropylene, and especially with a basis weight of between 30 g/m² and 300 g/m².

5. Building sealing material according to one of the preceding claims, **characterized in that** provision is made for at least one reinforcing course.

6. Building sealing material according to one of the preceding claims, **characterized in that** the composite course of the building sealing material (1) is formed as a vapour-proof barrier and/or formed in an asphalt-resistant manner.

7. Building sealing material according to one of the preceding claims, **characterized in that** the sealing course (2, 3, 10) is applied to the decoupling course (5) by means of extrusion coating.

8. Building sealing material according to one of the preceding claims, **characterized in that** on at least an outer side of the building sealing material (1) provision is made for a structuring, especially a fabric-like, fibrous, textile or foamed material, adhering particles, undercuts and/or protrusions and/or, at least over part of the surface, an adhesion promoter and/or an adhesive layer.

9. Building sealing material according to one of the preceding claims, **characterized in that** the inner sides of adjacent sealing courses (2, 3, 9) which face each other are profiled.

## Revendications

1. Matériau d'étanchéification (1) flexible, plan, en particulier en forme de bande, destiné à être utilisé de préférence en tant que barrière dans une maçonnerie et/ou en tant qu'étanchéification de constructions horizontales, comportant au moins une première couche d'étanchéification (2) étanche à l'eau formant un premier plan d'étanchéification, et une deuxième couche d'étanchéification (3) étanche à l'eau formant un deuxième plan d'étanchéification, l'épaisseur totale des couches d'étanchéification (2, 3, 10) se situant entre 250 µm et 2 500 µm, et entre le premier plan d'étanchéification et le deuxième plan d'étanchéification étant prévu au moins un plan d'isolement (4) intérieur, par lequel la première couche d'étanchéification (2) est isolée de la deuxième couche d'étanchéification (3) de telle sorte qu'il se forme au moins deux couches d'étanchéification indépendantes l'une de l'autre et séparées, entre lesquelles est disposé le plan d'isolement, **caractérisé en ce que** la première couche d'étanchéification (2) et la deuxième couche d'étanchéification (3) sont partiellement reliées l'une à l'autre, le plan d'isolement (4) comportant un espace libre non relié entre les couches d'étanchéification (2, 3).

2. Matériau d'étanchéification selon la revendication 1, **caractérisé en ce que** l'épaisseur totale des couches d'étanchéification (2, 3, 10) se situe entre 350 µm et 1 200 µm et en particulier dans la plage entre 400 µm et 800 µm.

3. Matériau d'étanchéification selon la revendication 1 ou 2, **caractérisé en ce qu'**au moins une couche d'isolement (5) est prévue dans le plan d'isolement (4), **en ce qu'**en cas de perforation d'une couche d'étanchéification, la couche d'isolement (5) sert à transformer l'énergie cinétique en énergie de déformation, et/ou **en ce que** la couche d'isolement (5) est réalisée de telle sorte que l'isolement entre la première couche d'étanchéification (2) et la deuxième couche d'étanchéification (3) s'effectue à l'intérieur de la couche d'isolement (5).

4. Matériau d'étanchéification selon l'une quelconque des revendications précédentes, **caractérisé en ce que** la couche d'isolement (5), réalisée de préférence sous forme multicouche, comporte un non-tissé, un tissu, un mat, un textile, un matériau apte à subir une déformation plastique ou un fluage à froid, une mousse et/ou un matériau élastique, ou **en ce que** la couche d'isolement (5) est réalisée sous forme de non-tissé en matière plastique, de préférence en polypropylène, et en particulier avec un grammage entre 30 g/m² et 300 g/m².

5. Matériau d'étanchéification selon l'une quelconque des revendications précédentes, **caractérisé en ce qu'**il est prévu au moins une couche de renfort.

6. Matériau d'étanchéification selon l'une quelconque des revendications précédentes, **caractérisé en ce que** la combinaison de couches du matériau d'étanchéification (1) est réalisée sous la forme d'une barrière à la vapeur et/ou sous forme de matériau stable au bitume.

7. Matériau d'étanchéification selon l'une quelconque des revendications précédentes, **caractérisé en ce que** la couche d'étanchéification (2, 3, 10) est déposée sur la couche d'isolement (5) au moyen d'un procédé d'extrusion-laminage.

8. Matériau d'étanchéification selon l'une quelconque des revendications précédentes, **caractérisé en ce qu'**au moins sur une face extérieure du matériau d'étanchéification (1) sont prévus une structuration, en particulier un matériau de type non-tissé, fibreux, textile ou poreux, des particules adhérentes, des contre-dépouilles et/ou des saillies et/ou un agent de pontage et/ou une couche de colle sur au moins une partie de la surface.

9. Matériau d'étanchéification selon l'une quelconque des revendications précédentes, **caractérisé en ce que** les faces intérieures orientées l'une vers l'autre de deux couches d'étanchéification (2, 3, 9) adjacentes sont profilées.
